# EUROPEAN PATENT APPLICATION

(11) **EP 4 628 843 A1**
(43) Date of publication of application: **08.10.2025**
(21) Application number: 25165922.3
(22) Date of filing: 25.03.2025
(51) Int. Cl.: G01C 15/00

(54) **LASER LEVEL**

(30) Priority: 01.04.2024 US 202463572627 P; 10.03.2025 US 202519075126
(71) Applicant: Stanley Black & Decker, Inc., New Britain, CT 06053 (US)
(72) Inventor: JIANG, Young, Suzhou, 215021 (CN); MA, Grady Jiqiu, Suzhou, 215021 (CN); SERGYEYENKO, Oleksiy, Baldwin, 21013 (US); CHANG, Kun, Suzhou, 215021 (CN); LASSILA, David B., New Haven, 06511 (US)
(74) Representative: SBD IPAdmin

(57) **Abstract**

A laser level includes a housing, a laser module carrier, and a laser module on the laser module carrier. The laser module includes a laser generator, a collimating lens and a cone mirror. The laser module is configured to project a laser line in a vertical plane generally about 360 degrees. The laser line comprises a higher power portion and a lower power portion. The laser level is configured such that the higher power portion is directed generally upwardly towards a ceiling.

## Description

The present invention relates to laser levels, battery powered laser levels, laser level brackets, and laser level systems.

There are various existing laser levels and laser level systems. It is desired to provide a laser level with an improved construction.

A first aspect of the invention provides a laser level according to Claim 1 of the appended claims.

Preferred, and other optional, features are described and defined in the dependent claims.

It is explicitly to be understood that any feature, including any preferred or other optional feature, of any aspect or embodiment of the invention or disclosure may be a feature, including a preferred or other optional feature, of any other aspect or embodiment of the invention or disclosure.

According to another aspect of the invention, a laser level includes a housing; a laser module carrier; a laser module on the laser module carrier. The laser module may include a laser generator, a collimating lens and a cone mirror. The laser module may be configured to project a laser line in a vertical plane generally about 360 degrees. The laser line may include a higher power portion and a lower power portion. The cone mirror has an apex. An optical axis defined by at least one of the laser generator and the collimating lens is offset from the apex in an upward direction.

The laser line may have a first portion directed directly upwardly.

The laser line may have a second portion directed opposite the first portion.

A power of the first portion may be greater than a power of the second portion.

The offset may be at least 0.4 mm.

The offset may be 1.2 mm or less.

The offset may be in a range of 0.5 to 1.1 mm.

The laser generator may be a laser diode.

The laser beam directed at the cone mirror may include a fast axis and a slow axis.

A power of the laser beam at the fast axis may be at least 1.5 as much as a power of the laser beam at the slow axis.

The power of the first portion may be at least 50% greater than the power of the second portion.

The power of the first portion may be at least 100% greater than the power of the second portion.

The power of the first portion may be at least 150% greater than the power of the second portion.

A laser beam directed at the cone mirror may include a fast axis and a slow axis.

The offset may be generally along the short axis.

The laser level may be rotatably mounted on a bracket.

According to another aspect of the invention, a laser level includes: a housing; a first laser module comprising a first laser generator, a first collimating lens, and a first cone mirror. A second laser module includes a second laser generator, a second collimating lens, and a second cone mirror. The first laser module is configured to project a first laser line in a vertical plane generally about 360 degrees. The second laser module is configured to project a second laser line in a horizontal plane generally about 360 degrees. The first laser module may be configured to project the first laser line such that a first portion of the first laser line within five degrees of directly upward has a higher power than a second portion of the first laser line directed within five degrees of directly downward.

The second laser module may be configured to project the second laser line such that a first portion of the second laser line within five degrees of directly forward has a higher power than a second portion of the second laser line within five degrees of directly rearward.

The first cone mirror may have an apex, and an optical axis defined by at least one of the first laser generator and the first collimating lens may be offset from the apex in an upward direction.

The offset may be in a range of 0.4 mm to 1.2 mm.

The offset may be in a range of 0.5 to 1.1 mm.

According to another aspect of the invention, a laser level includes: a housing; a laser module carrier; and a laser module on the laser module carrier. The laser module includes a laser generator, a collimating lens and a cone mirror. The laser module may be configured to project a laser line in a vertical plane generally about 360 degrees. The cone mirror has an apex. The laser generator generates a laser beam which passes through the lens and reflects off of the cone mirror. 90 degrees is defined as directly upwardly and 270 degrees is defined as directly downwardly. A power of the laser line at a 90 degree position is at least two times a power of the laser line at the 270 degree position.

A power of the laser line at a 100 degree position may be at least two times a power of the laser line at the 260 degree position.

A power of the laser line at an 80 degree position may be at least two times a power of the laser line at the 280 degree position.

According to another aspect of the invention, a laser level includes: a housing; a laser module carrier; and a laser module on the laser module carrier. The laser module includes a first holder supporting a laser generator and collimating lens assembly. The laser module includes a second holder engaged with the first holder. The second holder supports a cone mirror assembly, the cone mirror assembly comprising a cone mirror and a glass cylinder. The first holder is offset with the second holder.

The first holder may have a wall than engages the second holder, and the wall may have an uneven thickness.

The uneven thickness of the wall may provide the offset.

The second holder may include an aperture.

A center of the aperture may be aligned with an apex of the cone mirror.

A center of the aperture may be offset from the optical axis of the collimating lens.

According to another aspect of the invention, a laser level includes: a housing; a laser module carrier; and a laser module on the laser module carrier. The laser module comprises a laser generator, a collimating lens and a cone mirror. The laser module is configured to project a laser line in a vertical plane generally about 360 degrees. The cone mirror has a cone mirror axis. An optical axis is defined by at least one of the laser generator and the collimating lens. A y-direction is defined as a vertical direction as oriented by gravity. The optical axis is higher than the cone mirror axis in the y-direction by an offset.

The offset may be in a range of 0.4 mm to 1.2 mm.

The offset may be in a range of 0.5 to 1.1 mm.

Example embodiments of the present invention are described with reference to, and in conjunction with, the accompanying drawings, in which:
Fig. 1 illustrates a side view of a laser level system according to an example embodiment;
Fig. 2 is rear view of the laser level system of Fig. 1;
Fig. 3 is a side view of an example embodiment of a laser level system;
Fig. 4 is a side view of an example embodiment of a laser level system;
Fig. 5 is a front view of an example embodiment of a laser level system;
Fig. 6 is a top view of an example embodiment of a laser module assembly;
Fig. 7 is a perspective view of an example embodiment of a laser module assembly;
Fig. 8 is a perspective view of an example embodiment of a laser level system with explanatory planes;
Fig. 9 is a laser diode projection diagram of an example embodiment;
Fig. 10 illustrates a cross-sectional view of an example embodiment of a laser module;
Fig. 11 illustrates a cross-sectional view of an example embodiment of a laser module;
Fig. 12 illustrates a cross-sectional view of an example embodiment of a laser module;
Fig. 13 illustrates a cross-sectional view of an example embodiment of a laser module;
Fig. 14 is a laser diode projection diagram of an example embodiment;
Fig. 15 illustrates a top view of a laser level system of an example embodiment; and
Fig. 16 illustrates a top view of a laser level system of an example embodiment with an offset horizontal laser beam plane.

The drawings are for the purpose of illustration and description only and are not intended as a definition of the limits of the invention. In addition, it should be appreciated that structural features shown or described in any one embodiment herein can be used in other embodiments. As used in the specification and in the claims, the singular form of "a", "an", and "the" include plural referents unless the context clearly dictates otherwise.

All closed-ended (e.g., between A and B) and open-ended (greater than C) ranges of values disclosed herein explicitly include all ranges that fall within or nest within such ranges. For example, a disclosed range of 1-10 is understood as also disclosing, among other ranged, 2-10, 1-9, 3-9, etc.

As used herein, the terminology "at least one of A, B and C" and "at least one of A, B and C" each mean any one of A, B or C or any combination of A, B and C. For example, at least one of A, B and C may include only A, only B, only C, A and B, A and C, B and C, or A, B and C.

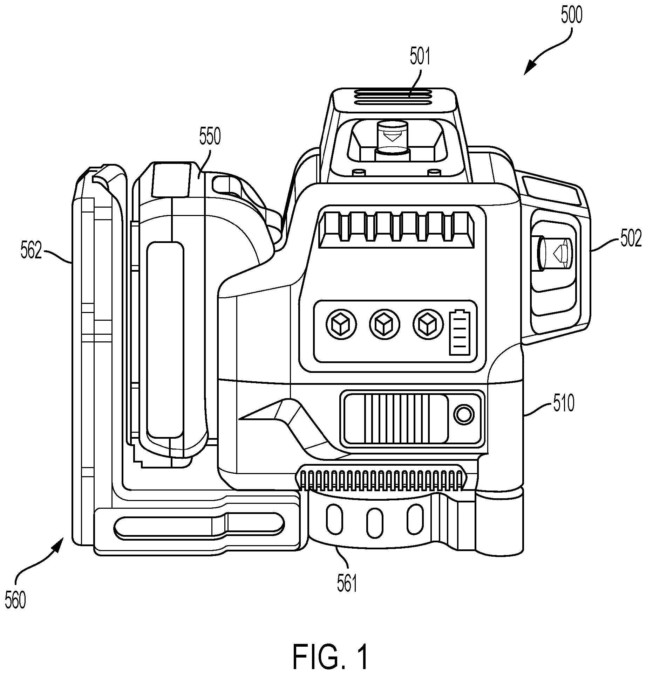

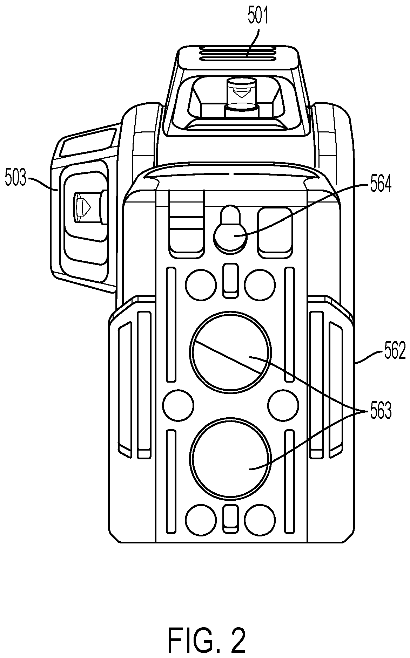

Figs. 1 and 2 illustrate a laser level 500 of an example embodiment. The laser level 500 is powered by a battery pack 550. As shown in Figs. 1 and 2, the laser level 500 has a housing 510 and three laser projectors 501, 502, 503. The laser projectors 501, 502 and 503 project the three laser lines about 360 degrees. The battery pack 550 is removably connected to the housing 510 to provide power to laser generators which generate laser beams and thus the three laser lines. Because the laser level projects three laser lines, and each laser line projects generally in a circle about 360 degrees, the laser level 500 may be considered a 3 x 360 laser level. The laser level 500 is mounted on a bracket 560 with a base portion 561 and a mounting portion 562. The laser level 500 is attached to the base 561. As shown in Fig. 2, the mounting portion 562 of the bracket 560 includes two magnets 563. The magnets 563 allow the bracket 560 to be mounted to a metal beam or other metal surfaces. The bracket 560 may also include a key hole 564 for mounting via a screw or nail. The laser level of Figs. 1 and 2, the battery pack 550 is mounted to the laser housing 510.

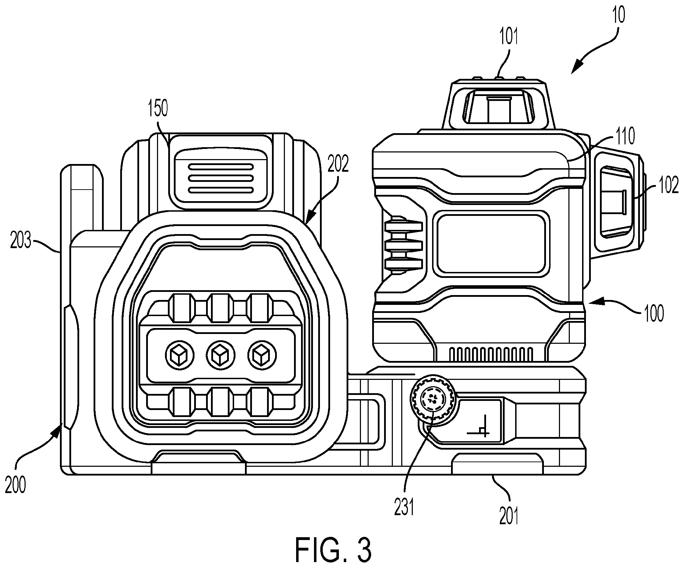

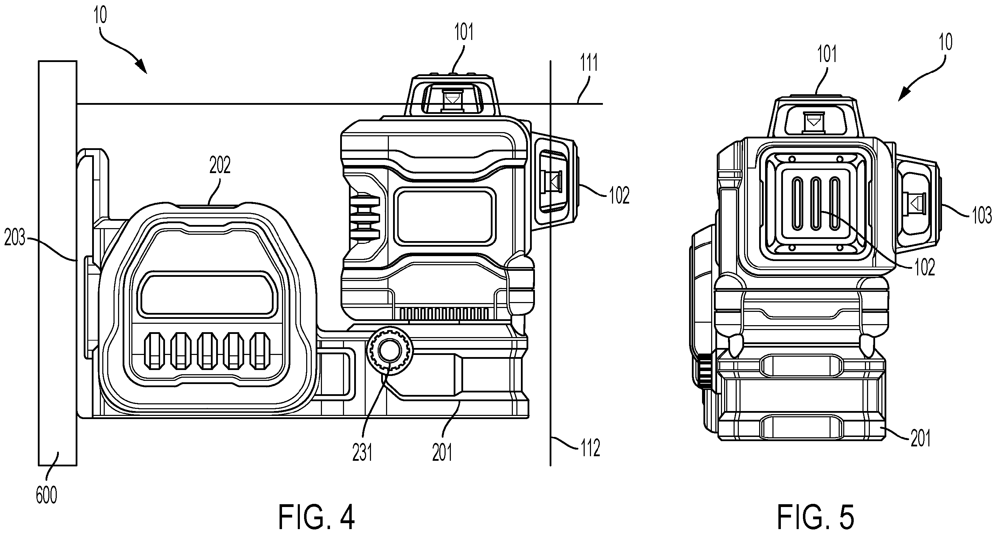

Figs. 3-5 illustrate another 3 x 360 laser level system 10 according to an example embodiment. As shown in Fig. 3, the system 10 includes a laser level 100, a bracket 200 and a battery pack 150. Fig. 3 shows the laser level system 10 with the battery pack 150. Fig. 5 shows the system 10 with the battery pack removed. As shown, the battery pack 150 is removably coupled to the bracket 200.

As shown in Figs. 3-5, the bracket 200 has a base portion 201, a receptacle portion 202 and a mounting portion 203. The laser level 100 is mounted on the base portion 201. The battery pack is mounted at the receptacle portion 202 and the mounting portion 203 includes magnets for attaching the bracket 200 to a metal stud or other object.

As shown in Figs. 1 and 2, the laser level 500 includes three laser projectors 501, 502, and 503. As shown in Figs. 3-5, the laser level 100 includes three laser projectors 101, 102, and 103. In either event, the three laser projectors project three perpendicular laser beams. When the laser level systems including laser levels 100 and 500 are set on a flat horizontal surface or mounted upright and allowed to settle to a leveled position, the three laser projectors are configured to project two laser beams in vertical planes and one laser beam in a horizontal plane.

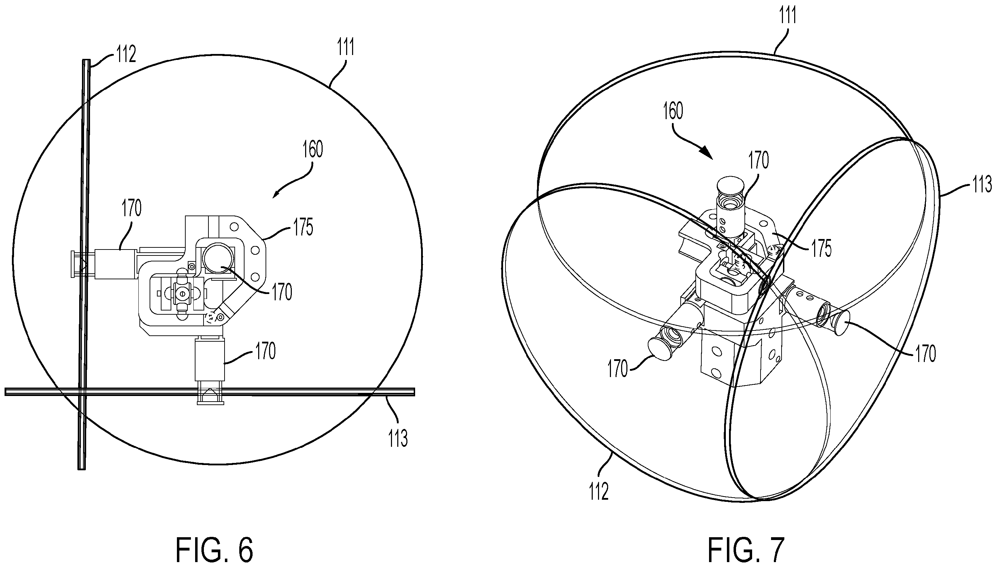

Figs. 6 and 7 illustrate a laser module assembly 160 which produces three laser lines. The laser module assembly may be used in the laser level 100 and laser level 500. The laser module assembly 160 produces the laser lines 111, 112 and 113 that project out of the three laser projectors 501, 502, and 503 and 101, 102 and 103, respectively.

The laser module assembly 160 is described with respect to the laser level 100 of Fig. 3-5 for ease of reference, but is similarly utilized in the laser level 500 of Figs. 1 and 2. The laser module assembly 160 is housed in the housing 110 of the laser level 100. The laser module assembly 160 includes three laser modules 170. The three laser modules 170 are carried on a pendulum assembly 175. Each laser module includes a laser generator such as a laser diode and a reflector such as a cone reflector. The laser diode produces a laser beam which is reflected off the surface of the reflective cone to project laser lines 111, 112, and 113 at the three laser projectors 101, 102 and 103.

The pendulum assembly 175 rotates about a relatively small angle so that the laser modules 170 project beams in the horizontal and vertical planes when placed on a surface that is not entirely horizontally flat. For example, if the laser level 10 is placed on a surface that is sloped five degrees (5°) with respect to horizontal, the pendulum assembly 175 will tilt under the influence of gravity so that the laser modules 170 are aligned to produce a laser line 111 in a horizontal plane and laser lines 112 and 113 in vertical planes. Additionally, in some embodiments the laser level 100 includes a locking device to lock the pendulum assembly 175. In those instances the pendulum assembly 175 will be locked in a particular position rather than allowed to rotate under the influence of gravity and it may produce laser lines offset from the vertical and horizontal. For example, the pendulum assembly 175 may be locked and the laser level angled to provide a line 5 degrees from horizontal.

The laser lines 111, 112, 113 project out from the laser level 100 onto walls, floors ceilings or other surfaces. As there are three beams which project in a circular pattern, the laser level 100 is considered a 3 x 360 laser level. When the laser level assembly 10 is attached to a vertical wall at the mounting portion 203, the laser level 100 produces two vertical laser lines and one horizontal laser line. Similarly, then the laser level assembly is placed on a flat horizontal surface, the laser level 100 produces two vertical laser lines and one horizontal laser line. The mounting portion 203 at the back of the laser level assembly 10.

In the example embodiments of Figs. 1-2 and Figs. 3-5, the laser levels are 3 x 360 laser levels. In other example embodiments, there may be more or fewer projected lines. For example, an example embodiment may include a 2 x 360 laser level or a 1 x 360 laser level.

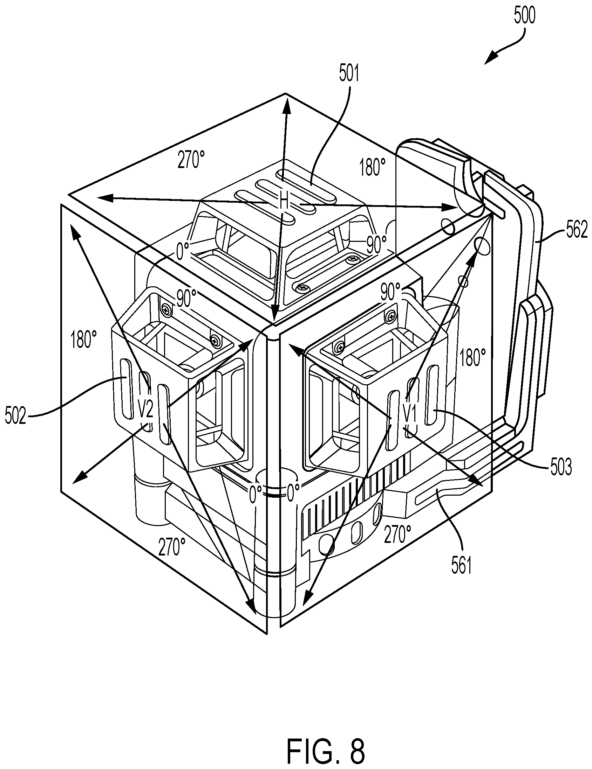

Fig. 8 is a perspective view of the laser level 100 of Figs. 1 and 2 with explanatory plane illustrations. The laser level 100 would project vertical lines 113 and 112 in planes V1 and V2 and horizontal line 111 in a horizontal plane H. As shown, for the horizontal plane H, a forward direction may be considered 0 degrees and a rearward direction 180 degrees. For vertical plane V1, an upward direction may be 90 degrees, a downward direction 270 degrees, and a forward direction 0 degrees. For vertical plane V2 an upward direction may be 90 degrees, a downward direction 270 degrees. The explanatory planes are similarly applicable to the exemplary embodiment of Figs. 3-5.

A vertical direction may be considered a y-direction and a horizontal direction may be considered an x-direction. A higher number in the y-direction may be considered vertically higher.

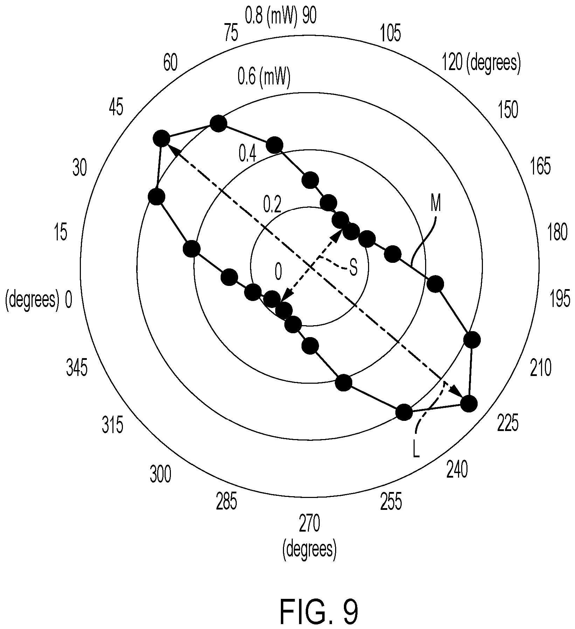

Fig. 9 is an explanatory diagram of a laser diode projection. In particular, Fig. 9 illustrates an outline of the perimeter of a beam M projected by a laser diode. As shown, the beam M has a fast axis L and a slow axis S. The slow axis S runs through roughly the center of the fast axis L. As also shown in Fig. 9, there are two lobes on either side of the slow axis S that are wider than the width of the slow axis S.

In the explanatory diagram of Fig. 9, degrees are numbered in a circle. In the example, the fast axis L runs from an angle of roughly 45 degrees to an angle of 225 degrees. In an example embodiment, the fast axis L may run from an angle of 35 to 55 degrees to an angle of 215 to 235 degrees. In other example embodiments, the fast axis L may be aligned at other angles. For example, the fast axis L may run from roughly 0 degrees to roughly 180 degrees. In an example embodiment, the fast axis L may run from an angle of 330 to 30 degrees to an angle of 150 to 210 degrees; the fast axis L may run from an angle of 340 to 20 degrees to an angle of 160 to 200 degrees; or the fast axis L may run from an angle of 350 to 10 degrees to an angle of 170 to 190 degrees.

The explanatory diagram also includes a series of concentric circles representing power in milli-Watts (mW). As shown in Fig. 9, power of the laser beam M from laser diode 171 is highest along the fast axis L. In particular, along the fast axis L, the power output from the laser diode 171 is greater than 0.6 mW. Along the slow axis S, the power output from the laser diode 171 is about 0.2 mW. The powers may be higher or lower than that shown in Fig. 9. For example, a power along the fast axis L may be a greater than 1 mW, greater than 2mW, greater than 3mW, or greater than 4mW. Power along the slow axis S may be greater proportional to the fast axis L.

A power of the beam M at the fast axis L may be at least 1.5 times a power of the beam at the slow axis S; a power of the beam M at the fast axis L may be at least 2 times a power of the beam at the slow axis S; or a power of the beam M at the fast axis L may be at least 2.5 times a power of the beam at the slow axis S.

A width of the beam M when it reaches the collimating lens 182 described below may also be different along the fast axis L than along the slow axis S. For example, in an example embodiment, a width of the beam M along the fast axis L may be 1.3 times the width of the beam M along the slow axis L when the beam M when it reaches the collimating lens; a width of the beam M along the fast axis L may be 1.5 times the width of the beam M along the slow axis L when the beam M when it reaches the collimating lens; a width of the beam M along the fast axis L may be 1.7 times the width of the beam M along the slow axis L when the beam M when it reaches the collimating lens; a width of the beam M along the fast axis L may be 2 times the width of the beam M along the slow axis L when the beam M when it reaches the collimating lens; a width of the beam M along the fast axis L may be 2.5 times the width of the beam M along the slow axis L when the beam M when it reaches the collimating lens.

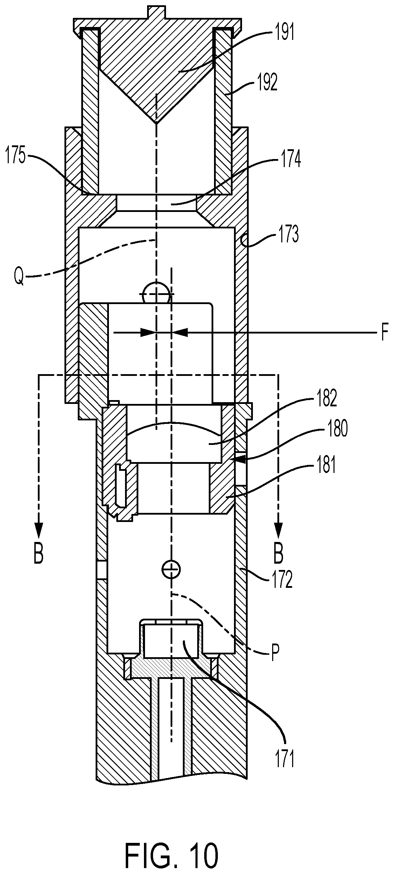

Fig. 10 illustrates a laser module 170 of an example embodiment. As previously discussed, there may be three laser modules 170. There may be at least one laser module 170, at least two laser modules 170, at least three laser modules 170, or at least four laser modules 170. In the example embodiment, the laser modules 170 are carried by a passively leveled laser pendulum 175 to assist in providing levelized laser beams in horizontal, vertical or other desired or pre-defined planes. The passively leveled laser pendulum 175 is leveled due to gravity. In other embodiments, the laser modules 170 may be on an actively leveled carrier, the actively leveled carrier being leveled as desired by motors or other active methods. For example, sensors may detect the position of the actively leveled carrier and motors may move the carrier to a desired position.

As shown in Fig. 10, the laser module 170 includes a laser generator 171 in the form of a laser diode 171. The laser diode 171 is powered by one of the previously described battery packs 550, 150. The laser diode is aligned with a collimating lens assembly 180. The collimating lens assembly 180 includes a collimating lens holder 181 and a collimating lens 182. A first holder 172 is a lens and diode holder 172 that holds the collimating lens assembly 180 and the laser diode 171 in an aligned position along an optical axis P. A second holder 173 is engaged with the first holder 172. The second holder 173 supports a cone mirror assembly 190. The cone mirror assembly 190 includes a cone mirror 191 and a glass cylinder 192. The second holder 173 includes an aperture 174. The aperture 174 may be circular.

As shown in Fig. 10, the cone mirror 191 includes an axis Q. The axis Q is through a center of the cone mirror 191 and also an apex of the cone mirror 191. As shown, the axis Q is offset from the axis from the axis P by a distance F. The offset F may be 0.9 millimeters (mm). The distance F may be in a range of 0.5 to 1.4 mm. The distance F may be in a range of 0.6 to 1.3 mm. The distance F may be in a range of 0.7 to 1.2 mm The distance F may be in a range of 0.8 to 1.1 mm. The distance F may be in a range of 0.6 to 0.9 mm.

In an example embodiment, the offset may be generally along the slow axis S. If the slow axis S is sufficiently greater than the offset F, that allows the beam M to extend on both sides of the apex of the cone mirror 191 and so provide for 360 degree projection even if offset. In example embodiments, a width of the beam M along the slow axis S when it reaches the apex of the cone mirror 191 may be at least 10% greater than the offset distance F, may be at least 20% greater than the offset distance F, may be at least 30% greater than the offset distance F, or may be at least 40% greater than the offset distance F. For example, in an example embodiment, the offset F may be 0.9 mm and a width of the beam M along the slow axis S when it reaches the apex of the cone mirror 191 may be 1.3 mm. In that example, the width of the beam M along the slow axis S when it reaches the apex of the cone mirror 191 is approximately 44% greater than the offset F.

If the slow axis S exceeds the offset distance F by too great of an amount, the offset may have less effect than may be desired for a particular application. Accordingly, in some example embodiments, a width of the beam M along the slow axis S when it reaches the apex of the cone mirror 191 may not more than 150% greater than the offset F, not more than 100% greater than the offset F; not more than 90% greater than the offset F; not more than 80% greater than the offset F; or not more than 70% greater than the offset F. For example, in an example embodiment, the offset F may be 0.9 mm and a width of the beam M along the slow axis S when it reaches the apex of the cone mirror 191 may be 1.1 mm. In that example, the width of the beam M along the slow axis S when it reaches the apex of the cone mirror 191 is approximately 22% greater than the offset F.

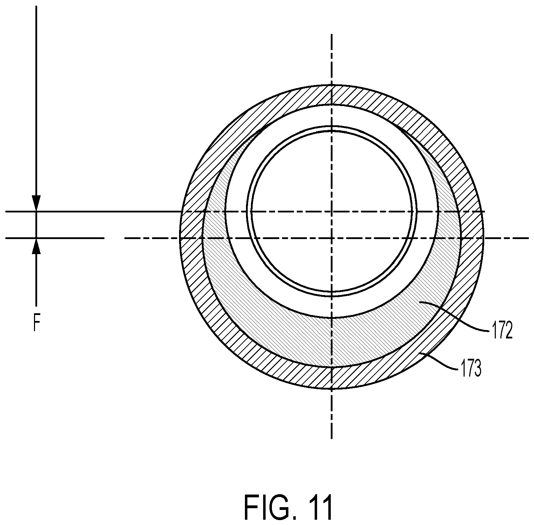

Fig. 11 illustrates a cross-sectional view along the section B-B, shown in Fig. 10. As shown, the holder 172 is thicker on one side so as to provide the offset F. In the example embodiment, as shown in Fig. 11, a top end of the holder 172 closest to the cone mirror 191 does not extend fully around to complete a circle. In other embodiments, the holder 172 a top end of the holder 172 closest to the cone mirror 191 may extend around a full circle.

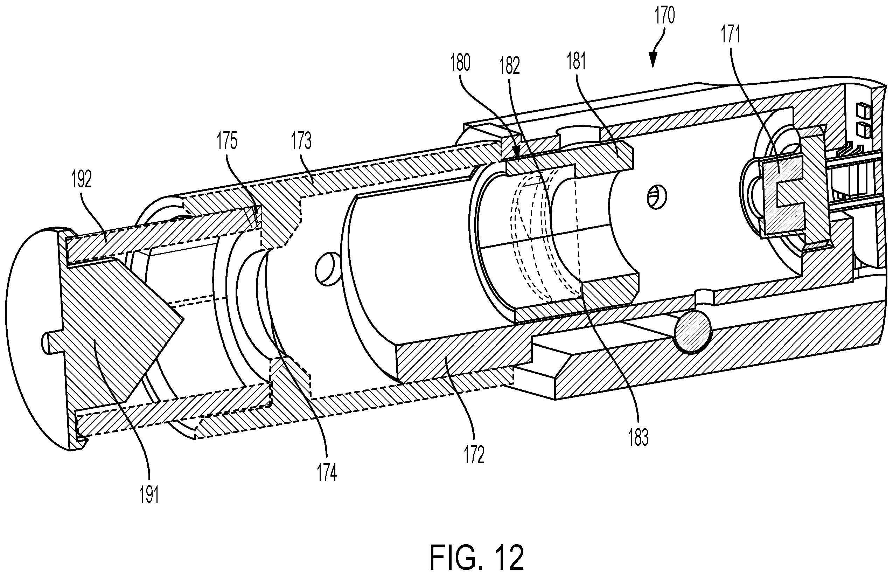

Fig. 12 is a perspective cross-sectional view of the module 170. As shown in Fig. 12, the collimating lens holder 181 includes a ledge 183 for supporting the collimating lens 182. As also shown, the glass cylinder 192 is supported by a ledge 175 of the holder 173 adjacent to the aperture 174.

In an example embodiment, the collimating lens holder 181 may be secured in the holder 172 via one or more of an adhesive or a friction fit. In an example embodiment, the holder 172 may be secured with the holder 173 via one or more of an adhesive or a friction fit. In an example embodiment, the glass cylinder 192 may be secured with the holder 173 via one or more of an adhesive or a friction fit.

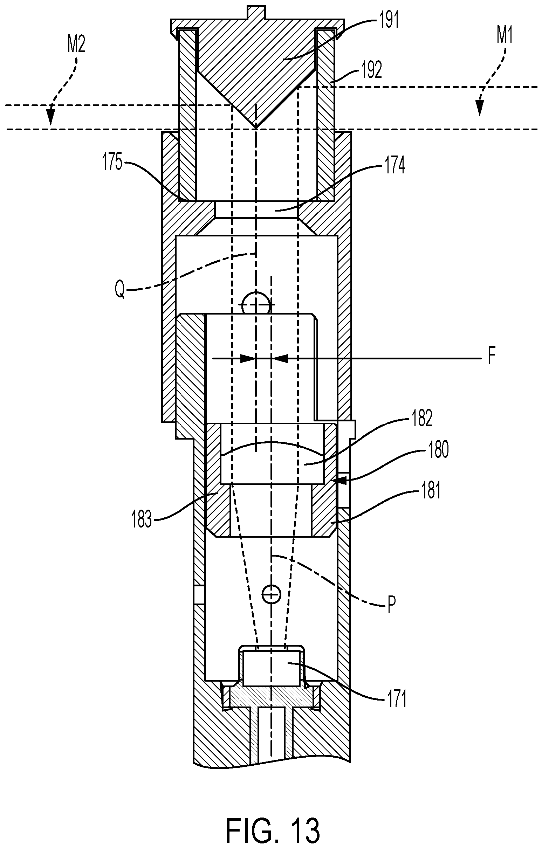

Fig. 13 illustrates the laser module 170 as shown in Fig. 10, with the inclusion of beam M. As shown, since the optical axis P is offset from the cone axis Q, the beam M is not centered around the apex of the cone 191. Therefore, the beam M is split unevenly with higher powered portions M1 and lower powered portions M2.

In example embodiments, the offset F is provided in a direction to provide greater power of the laser beam M to certain areas which may be useful to a user. For example, a user may utilize a laser beam on a ceiling more than a floor or a laser level may be placed closer to the floor. In such a situation, it may be desirable to direct more laser power of a vertical plane beam upwardly and towards a ceiling than downwardly and towards a floor. For example, the offset may be in the upward direction or, in other words, the optical axis P may be higher in the y-direction than the cone axis Q. In some embodiments, it may be useful to direct a horizontal plane beam in a particular direction, such as a forward direction. Other offsets are possible. For example, in some embodiments, the offset may be in a downward direction or a rearward direction. Additionally, there may be offsets in both a vertical and a horizontal direction. For example, there may be an offset F in an upward direction by an amount such as 0.4 to 1.2 mm and at the same time an offset in the forward direction or rearward direction by some amount.

With reference to Figs. 1-2, the battery pack 550 may represent a back of the laser level 500; the mounting portion 562 may represent the back of a laser level assembly including the bracket 560 and laser level 500; and the laser projector 502 may be the front of the laser level 500 and laser level assembly. The laser projector 501 may be a top.

With reference to Figs. 3-5, the mounting portion 203 may represent the back of laser level assembly 10 including the bracket 200 and laser level 100. The laser projector 102 may be the front of the laser level 100 and laser level assembly 10. The surface of the housing 110 opposite the projector 102 may be a back or rear of the laser level 100. The laser projector 101 may be at a top.

As discussed with reference to Fig. 8, an example embodiment may project lasers in two vertical planes V1 and V2. In an example embodiment, the offset F for the laser modules 170 that produce the vertical planes V1, V2 may be in the upward direction. That is, an offset F may be in a direction towards the top of the laser level 500 for one or both of the laser modules 170 that produce vertical planes V1, V2. Accordingly, a relatively higher power portion M1 may be directed towards the ceiling and a relatively lower power portion M2 may be directed towards the floor.

In an example embodiment, the offset F for the laser module 170 that produces the horizontal plane H may be in the forward direction. That is, an offset F may be in a direction towards the front of the laser level 500 for the laser module 170 that produces horizontal plane H. Accordingly, a relatively higher power portion M1 may be directed forwardly and a relatively lower power portion M2 may be directed rearwardly.

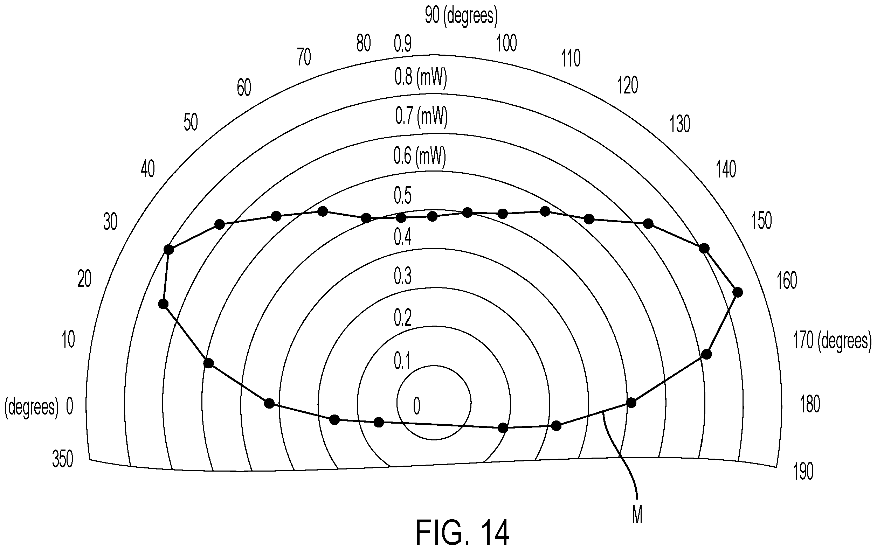

Fig. 14 is an explanatory view of a beam M that is offset along the slow axis S. The example embodiment of Fig. 14 may be applied to the vertical plane V1 or V2 shown in Fig. 8. In the example embodiment of Fig. 14, the slow axis S is roughly along the degrees 90 to 270. The fast axis L is perpendicular to the slow axis S.

As shown in Fig. 14, the beam M is offset upwardly towards the 90 degree upward position that may be directed to a ceiling. In the example of Fig. 14, the beams 112 and 113 in the vertical planes V1 and V2 are directed such that greater power is directed relatively upwardly versus downwardly. Accordingly, a power of the beam M of the example embodiment put out by the laser diode 171 is almost 0.5mW in an upward direction indicated by 90 degrees. On the other hand, a power of the beam M put out by the laser diode 171 is less than 0.1mW in a downward direction at 270 degrees opposite the 90 degrees upward direction. Accordingly, relatively more power of the beam is at and above the vertical projectors 502, 503 or 102, 103 than below the vertical projectors. Peak power of the example of Fig. 14 is at roughly 30 degrees and 160 degrees.

In an example embodiment, a power of the beam at a position of 90 degrees may be at least 2 times, at least 3 times, or at least 4 times a power of the beam at position of 270 degrees.

In an example embodiment, a power of the beam directed at a position of 100 degrees may be at least 1.5 times, at least 2 times, or at least 2.5 times a power of the beam directed at a position of 260 degrees. In an example embodiment, a power of the beam directed at a position of 80 degrees may be at least 1.5 times, at least 2 times, or at least 2.5 times a power of the beam directed at a position of 280 degrees.

Fig. 14 illustrates that powers on one side of the line running from 0 to 180 degrees may be multiples of corresponding positions on the opposite side, such as at least 1.5 times, at least 2 times, at least 3 times, or at least 4 times. That is, a power directed to position of 110 degrees may be a multiple of the corresponding position of 250 degrees that corresponds to 110 relative to the line running form 0 to 180 degree. A position of 60 degrees corresponds to a position of 300 degrees, and so forth.

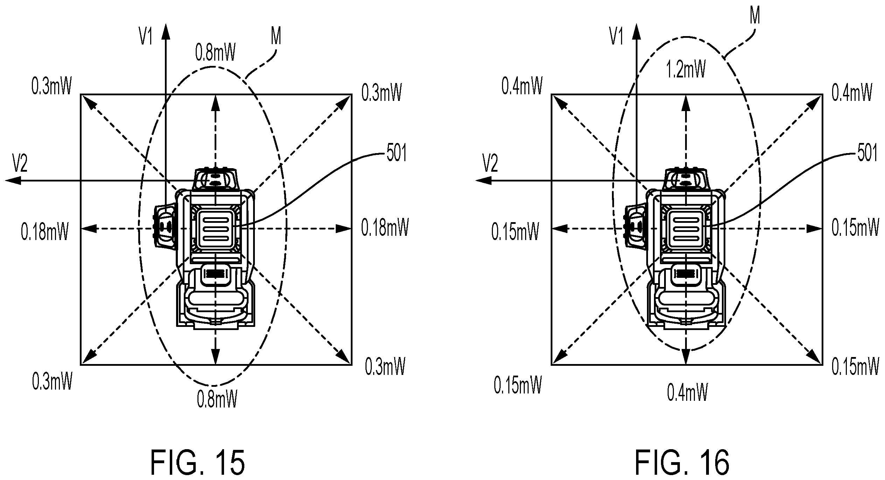

Figs. 15 and 16 illustrate an example embodiment introducing an offset F into the horizontal plane H (Fig. 8). The offset F is in the forward direction or 0 degrees of plane H shown in Fig. 8. Fig. 15 illustrates an embodiment with no offset F in the horizontal plane H. The slow axis S is along the axis 90 degrees to 270 and the fast axis L is perpendicular to the slow axis S. As shown in Fig. 15, the forward power is 0.8 mW and the rearward power is the same 0.8 mW. Similarly, the left and right powers along the slow axis S are equal 0.18 mW.

In the example embodiment of Fig. 16, the beam M is offset by a distance F. As previously discussed, the offset F may be 0.9 mm, for example. In the example embodiment, a forward portion at 0 degrees then has a power of 1.2 mW versus a rearward power of 0.4 mW. The forward power may be at least 50% greater than the rearward power, at least 100% greater than the rearward power, or at least 150% greater than the rearward power. The forward corners 45 degrees away from 0 (45 degrees and 315 degrees) have a power of 0.4mW. Conversely, the rearward corners 45 degrees away from 180 (135 and 225) have a power of 0.15 mW. The forward corner power may be at least 50% greater than the rearward corner power, at least 100% greater than the rearward corner power, or at least 150% greater than the rearward corner power.

The invention has been described by way of example embodiments,. Although the description provided above provides detail for the purpose of illustration based on what is currently considered to be the most practical and preferred embodiments, it is to be understood that such detail is solely for that purpose and that the disclosure is not limited to the expressly disclosed embodiments, but, on the contrary, is intended to cover modifications and equivalent arrangements that are within the scope of the appended claims. For example, it is to be understood that the present disclosure contemplates that, to the extent possible, one or more features of any embodiment can be combined with one or more features of any other embodiment.

## Claims

1. A laser level, comprising:
a housing;
a laser module carrier;
a laser module on the laser module carrier;
wherein the laser module comprises a laser beam generator, a collimating lens and a cone mirror;
wherein the laser module is configured to project a laser line 360 degrees around the laser module by reflection of the laser beam from the cone mirror;
wherein the laser line comprises a higher power portion and a lower power portion;
wherein the cone mirror has an apex; and
wherein an optical axis defined by at least one of the laser generator and the collimating lens is offset from the apex, thereby to project the higher power portion and the lower power portion of the laser line.

2. A laser level according to Claim 1, wherein the laser module is configured to project the laser line in a vertical plane.

3. A laser level according to Claim 2, wherein the offset is in an upward direction.

4. A laser level according to Claim 3, wherein the laser line has a first portion directed directly upwardly, the laser line has a second portion directed opposite the first portion, and a power of the first portion is greater than a power of the second portion.

5. A laser level according to any preceding claim, wherein the offset is at least 0.4 mm and/or wherein the offset is 1.2 mm or less, preferably wherein the offset is in a range of 0.5 mm to 1.1 mm.

6. A laser level according to any preceding claim, wherein the laser generator is a laser diode.

7. A laser level according to any preceding claim, wherein a laser beam directed at the cone mirror includes a fast axis and a slow axis, and wherein a power of the laser beam at the fast axis is at least 1.5 times the power of the laser beam at the slow axis.

8. A laser level according to Claim 4 or any claim dependent thereon, wherein the power of the first portion is at least 50% greater than the power of the second portion.

9. A laser level according to Claim 8, wherein the power of the first portion is at least 100% greater than the power of the second portion.

10. A laser level according to Claim 9, wherein the power of the first portion is at least 150% greater than the power of the second portion.

11. A laser level according to any preceding claim, wherein a laser beam directed at the cone mirror includes a fast axis and a slow axis, and wherein the offset is generally along the short axis.

12. A laser level according to any preceding claim, wherein the laser level is rotatably mounted on a bracket.

13. A laser level according to any preceding claim, wherein the laser line is configured to be levelled with respect to gravity.

14. A laser level according to any preceding claim, wherein the laser module carrier comprises a pendulum assembly.
